# EUROPÄISCHE PATENTSCHRIFT

(11) **EP 0 715 568 B1**
(45) Veröffentlichungstag und Bekanntmachung des Hinweises auf die Patenterteilung: **12.05.1999**
(21) Anmeldenummer: 94900136.6
(22) Anmeldetag: 12.11.1993
(51) Int. Cl.: B29C 53/08

(54) **VERFAHREN UND VORRICHTUNG ZUM BIEGEN VON KUNSTSTOFFROHREN**
PROCESS AND DEVICE FOR BENDING PLASTIC TUBES
PROCEDE ET DISPOSITIF DE CINTRAGE DE TUBES EN PLASTIQUE

(30) Priorität: 04.09.1993 DE 4329965
(43) Veröffentlichungstag der Anmeldung: 12.06.1996
(73) Patentinhaber: ITT Automotive Europe GmbH, 60488 Frankfurt am Main (DE)
(72) Erfinder: SCHULTE, Franz, D-59557 Lippstadt (DE); MICHELS, Arnold, D-33378 Rheda-Wiedenbrück (DE)
(74) Vertreter: Dreiss, Fuhlendorf, Steimle & Becker
(86) Internationale Anmeldenummer: EP9303174
(87) Internationale Veröffentlichungsnummer: WO9507172

(56) Entgegenhaltungen:
- DE-A- 2 345 644
- DE-A- 2 355 468
- FR-A- 664 365
- GB-A- 935 560
- US-A- 5 030 083
- PATENT ABSTRACTS OF JAPAN vol. 8, no. 164 (M-313)(1601) 28. Juli 1984 & JP,A,59 059 417 (TOYODA GOSEI KK) 5. April 1984
- PATENT ABSTRACTS OF JAPAN vol. 8, no. 164 (M-313)(1601) 28. Juli 1984 & JP,A,59 057 715 (TOYODA GOSEI KK) 3. April 1984
- PATENT ABSTRACTS OF JAPAN vol. 007, no. 047 (M-196)24. Februar 1983 & JP,A,57 197 123 (TOYODA GOSEI KK) 3. Dezember 1982

## Beschreibung

Die Erfindung betrifft ein Verfahren gemäß dem Oberbegriff des Anspruchs 1 zum Biegen von Kunststoffrohren, bei dem das zu biegende Rohr zunächst erwärmt, dann in eine den Biegeverlauf bestimmende Vorrichtung eingebracht und in dieser abgekühlt wird, sowie eine Vorrichtung zur Durchführung dieses Verfahrens.

Bei einem bekannten Verfahren werden die Kunststoffrohre zunächst in einer warmen Flüssigkeit vorgewärmt, und zwar auf eine Temperatur, bei der sich die Rohre leichter, jedoch noch nicht plastisch verbiegen lassen. Dann werden die Rohre durch manuelles Verbiegen in ein plattenförmiges Aufnahmeteil eingelegt, welches rinnenförmige Vertiefungen in der Form des gewünschten Biegeverlaufs aufweist und das noch elastische Rohr in der gebogenen Form hält. Zusammen mit dieser Vorrichtung wird dann das Rohr in einen Heißluftofen gegeben, um es auf Plastifizierungstemperatur zu bringen. Danach wird das Rohr samt seiner Aufnahmevorrichtung abgekühlt und anschließend aus dem Aufnahmeteil entnommen. Da beim Biegen der Rohre im noch elastischen Zustand an den Stellen, an denen eine starke Verformung erfolgt, Spannungen entstehen, die sich beim Plastifizieren lösen und dabei eine Querschnittsverengung hervorrufen, wird häufig in die Rohre, bevor sie gebogen werden, eine flexible Seele eingezogen.

Dieses Verfahren zum Biegen von Kunststoffrohren ist wegen der Vielzahl der Arbeitsgänge und der entsprechenden Vielzahl von Arbeitsvorrichtungen, die einen großen Platz benötigen, sowohl zeit- als auch arbeitsaufwendig. Die Rohre müssen zwischen den einzelnen Verfahrensabschnitten jeweils an andere Verfahrensvorrichtungen transportiert werden, welches insbesondere bei langen Rohren sehr umständlich und platzaufwendig ist.

In der US 4,747,768 ist eine Biegevorrichtung dargestellt und beschrieben, mit der einem Kunststoffrohr mehrere hintereinanderliegende Biegungen gegeben werden können. Diese Biegevorrichtung besteht aus einem Ober- und Unterteil, wobei das Unterteil eine dem Durchmesser und der Länge des zu biegenden Rohres entsprechende Rinne aufweist. In diese Rinne wird das stranggepreßte, noch thermoerweichte Kunststoffrohr eingelegt. Dann fährt das Oberteil, das eine entsprechende Rinne aufweist, herunter, so daß die Rinne des Oberteils zusammen mit der Rinne des Unterteils einen röhrenförmigen Kanal bildet, in dem das zu biegende Rohr nunmehr liegt. Die den röhrenförmigen Kanal bildenden Teile des Ober- und Unterteils der Biegevorrichtung sind mehrteilig ausgeführt. Zum Biegen des Rohres werden die beiden Endabschnitte des röhrenförmigen Kanals ausgeschwenkt. In die durch das Ausschwenken der Endabschnitte sich bildende keilförmige Öffnung werden entsprechend geformte Zwickel eingeschoben, die ebenfalls eine dem Durchmesser des Rohres entsprechende Rinne aufweisen, die sich in ihrem Längsverlauf bogenförmig erstreckt. Diese in den Zwickel eingebrachte Rinne preßt den Rohrbogen nach, so daß sich genau der gewünschte Bogenverlauf ergibt. Nach dem erfolgten Biegen fahren die keilförmigen Segmente zurück und anschließend das Oberteil des Biegewerkzeuges hoch. Danach kann das gebogene Rohr aus der Biegevorrichtung entnommen werden.

Nachteilig bei diesem Verfahren und bei dieser Vorrichtung ist es, daß das Rohr während des Biegevorgangs in dem Abschnitt, wo es gebogen wird, nur unzureichend außen abgestützt ist, so daß der Querschnitt des Rohres in diesem Abschnitt eine Deformation erfährt. Außerdem liegen die beiden Biegungen des Rohres sehr nahe beieinander. Es ist auch nicht möglich, mit diesem Werkzeug drei oder mehr hintereinanderliegende Biegungen des Rohres durchzuführen.

Die gattungsbildende Druckschrift FR-A-664 365 offenbart ein Verfahren zum Biegen von Kunststoffrohren, wobei:
- das zu biegende Rohr auf eine Temperatur erwärmt wird, bei der es sich plastisch verformen läßt,
- das erwärmte Rohr in ein zweiteiliges Biegewerkzeug eingeschoben wird, dessen beide Teile eine Rinne aufweisen, die im zusammengefahrenen Zustand einen röhrenförmigen Kanal bilden, der einen Längsverlauf aufweist, der dem Längsverlauf des fertig gebogenen Kunststoffrohres und dessen Durchmesser dem Außendurchmesser des Rohres entspricht,
- das plastifizierte Kunststoffrohr durch die beiden in den zusammenfahrbaren Backen eingebrachten Rinnen gebogen wird,
- nach dem Biegen des Rohres dieses noch in den Backen eingespannt abgekühlt wird, und
- die Backen nach dem Abkühlen auseinandergefahren und das gebogene Rohr aus dem Biegewerkzeug entnommen wird.

Nachteilig an diesem Verfahren ist, daß die Erwärmung des Rohres in einer anderen Vorrichtung als der Biegevorgang erfolgt, so daß beim Transport des Rohres zur Biegevorrichtung eine unerwünschte Abkühlung desselben stattfinden oder eine unkontrollierbare plastische Verformung des Rohres auftreten kann.

Aufgabe der Erfindung ist es, ein Verfahren zum Biegen von Kunststoffrohren zu entwickeln, bei dem das Biegen einschließlich sämtlicher Vor- und Nachbereitungsarbeitsgänge in einer Vorrichtung erfolgt und das Biegen der Rohre selbst unabhängig von der Geschicklichkeit der den Biegevorgang ausführenden Person erfolgt. Weiterhin soll vermieden werden, daß an Biegestellen mit kleinen Krümmungsradien merkliche Querschnittsveränderungen auftreten.

Eine weitere Aufgabe der Erfindung ist es, ein Verfahren und eine Vorrichtung zur Durchführung dieses Verfahrens zu schaffen, bei denen weitestgehend beliebig viele Biegungen in ein langes Kunststoffrohr eingebracht werden können, wobei die Biegungen einen unterschiedlichen Krümmungsradius aufweisen und in unterschiedliche Richtungen verlaufen können. Weiterhin sollen die Biegungen ohne merkliche Querschnittsveränderungen entstehen.

Weiterhin soll das Verfahren einen Vorrichtungsaufbau ermöglichen, der einfach ist, und bei dem die Zustellbewegung der einzelnen Teile der Biegevorrichtung nur von einer Seite erfolgt. Das ermöglicht einen kompakten Aufbau und eine verletzungssichere Bedienung.

Diese Aufgaben werden erfindungsgemäß durch ein Verfahren gemäß Anspruch 1 gelöst.

Durch die Plastifizierung der Rohre sind diese relativ leicht in den rohrförmigen Kanal des Biegewerkzeugs einzuschieben. Dieses Einschieben kann noch dadurch erleichtert werden, daß die Rohre vorher außen mit einem Gleitmittel versehen werden. Das durch das gebogene, plastifizierte Rohr durchgepumpte Kühlmittel sorgt für ein schnelles Abkühlen des Rohres noch in der Biegeform.

Es ist vorteilhaft, das zu biegende Rohr nur in dem Abschnitt zu erwärmen, der in das Biegewerkzeug eingeschoben wird. Damit kann einmal die Heizvorrichtung kleingehalten werden und zum anderen bleibt der Endabschnitt des Rohres zum besseren Einschieben des Rohres in das Biegewerkzeug steif.

Weiterhin ist es vorteilhaft, das Rohr durch elektrisch beheizte Heizbacken zu erwärmen, da eine solche Heizvorrichtung gut regulierbar ist. Dabei wird der gewünschte Plastifizierungsgrad des erwärmten Rohres durch Messung der Heizdauer bestimmt.

Zum Einschieben des aufgeheizten Rohres in das Biegewerkzeug wird der Kanal durch geringfügiges Auseinanderfahren der Biegebacken erweitert und nach erfolgtem Einschieben bis zum Endanschlag zusammengefahren. Dadurch läßt sich das Rohr deutlich leichter einschieben. Am Ende des Einschiebens des Rohres in das Biegewerkzeug wird ein Sensor betätigt, der das Zusammenfahren der beiden Backen des Biegewerkzeugs auslöst.

Um das Ausbiegen des plastifizierten Rohres beim Einschieben in das Biegewerkzeug zu verhindern, wird das erwärmte Rohr beim Einschieben in das Biegewerkzeug von den Heizbacken geführt, die in unmittelbarer Nähe vor dem Biegewerkzeug angeordnet sind. Zur weiteren Erleichterung des Einschiebens werden die Heizbacken für das Einschieben des Rohres in das Biegewerkzeug geringfügig auseinandergefahren.

Ein wesentlicher Vorteil des erfindungsgemäßen Verfahrens liegt darin, daß das zu biegende Rohr nicht, wie bei bekannten Verfahren, in radialer Richtung in eine der Rinnen eingelegt und durch Heranfahren der zweiten Rinne umschlossen und dann durch Abwinkeln der Endabschnitte des röhrenförmigen Kanals gebogen wird, sondern durch axiales Einschieben des Rohres in den durch die beiden Rinnen gebildeten röhrenförmigen Kanal, wobei das zu biegende Rohr vorher auf einen bestimmten Längenabschnitt durch Erwärmen plastifiziert worden ist und beim Einschieben des Rohres der plastifizierte Abschnitt durch die beiden Heizbacken geführt wird, so daß das plastifizierte Rohr nicht seitlich ausknicken kann.

Die folgenden Schritte stellen eine vorteilhafte Weiterbildung des erfindungsgemäßen Verfahrens dar:
- das zu erwärmende Kunststoffrohr wird senkrecht hängend oder stehend in ein das Kunststoffrohr kontaktierendes Heizmittel eingebracht,
- das erwärmte Kunststoffrohr wird am oberen Ende ergriffen, senkrecht nach oben aus dem Heizmittel gezogen und seitlich zu einer Stellung über dem Biegewerkzeug gebracht,
- der plastifizierte Abschnitt des Kunststoffrohres wird senkrecht nach unten in den von den Rinnen der Backen des Biegewerkzeuges gebildeten, röhrenförmigen Kanal geschoben, wobei
- der röhrenförmige Kanal zum Einschieben des Kunststoffrohres durch Auseinanderfahren der Backen soweit erweitert wird, daß zunächst ein Vorbiegen erfolgt und nach dem Einschieben des Kunststoffrohres durch Zusammenfahren der Backen das Kunststoffrohr in seine endgültige Form gebogen wird.

Ein solches Verfahren läßt sich zumindest nach dem Einsetzen des Kunststoffrohres in das Heizmittel völlig automatisieren. Ein wesentlicher Punkt dieses erfindungsgemäßen Verfahrens ist, daß das Kunststoffrohr senkrecht stehend oder hängend erwärmt und danach senkrecht hängend aus dem Heizmittel herausgezogen und in der hängenden Lage, in der keine abstützenden Vorrichtungsteile erforderlich sind zu einer Stellung unmittelbar über dem Biegewerkzeug gebracht und in diese senkrecht nach unten eingeschoben wird. Das Vorbiegen bei noch nicht ganz geschlossenen Backen des Biegewerkzeugs hat den Vorteil, daß das plastifizierte Rohr ohne große Kräfte zum Vorbiegen in das Biegewerkzeug eingeschoben werden kann. Dieses Vorgehen hat den Vorteil, daß das Kunststoffrohr selbst bei kleineren Biegeradien beim nachfolgenden Zusammenfahren der Biegebacken keine merkliche Deformation des Querschnitts erfährt.

In der DE 14 79 227 A1 ist zwar schon ein Verfahren zum Biegen eines durch Erhitzen plastifizierten Kunststoffrohres durch Verschieben des Rohres in axialer Richtung in eine Biegevorrichtung vorbeschrieben, jedoch wird hierbei das plastifizierte Rohr zunächst auf einen gerade gestreckten Dorn aufgeschoben, der sich in einem gekrümmten Dorn fortsetzt. Dabei erfährt das zu biegende Rohr auf dem Abschnitt des gerade gestreckten Dornteils und auf dem gekrümmt verlaufenden Dornteil eine äußere Führung durch eine Hülse, die im Bereich des gerade gestreckten Dorns zylindrisch ausgestaltet ist und im Bereich des bogenförmig verlaufenden Dornteils entsprechend gekrümmt verläuft. Dieses Verfahren und diese Vorrichtung haben jedoch den Nachteil, daß das aufgeheizte Rohr sowohl durch den Dorn, als auch durch die äußere Hülse abgekühlt wird, so daß das zu biegende Rohr gerade auf den äußeren und inneren Mantelflächen, welche die größte Streckung bzw. größte Stauchung erfahren, vor dem Biegevorgang bereits erkaltet ist. Beim Auslösen des gebogenen Rohres aus der Biegevorrichtung müssen zunächst der gerade gestreckte und gebogene Rohrabschnitt voneinander getrennt werden und der gebogene Dornabschnitt dann auch dem gebogenen Rohr herausgezogen werden. Der letztere Vorgang läßt dementsprechend nur eine Biegung zu, die ein Teil eines Kreisbogens ist. Außerdem sind die Auszugskräfte des Dorns im gebogenen Bereich sehr groß, da dieser den Teil der Biegevorrichtung darstellt, an dem das zu biegende Rohr mit starken Anpreßkräften entlanggleitet. Beim Ausziehen des Dornabschnitts entstehen große Reibkräfte, insbesondere da das erwärmte Rohr beim Abkühlen auf den Dorn aufschrumpft. Dieses Verfahren und diese Vorrichtung lassen sich nur, wie in der Schrift selbst bereits ausgeführt, bei Rohren mit großem Durchmesser anwenden.

Bei einer vorteilhaften Ausgestaltung des erfindungsgemäßen Verfahrens wird durch das gebogene Rohr als Kühlmedium eine Flüssigkeit gepumpt und im Anschluß daran, mittels Durchblasen, von Luft oder einem Gas getrocknet.

Eine Vorrichtung zum Biegen von Kunststoffrohren mit mehreren hintereinanderliegenden Biegungen, weist eine Erwärmungs- und Biegestation mit den folgenden Merkmalen auf:
- die Biegestation weist ein Biegewerkzeug mit mindestens zwei zueinander verstellbaren Backen auf,
- in die aneinandergrenzenden Flächen der Backen sind Rinnen eingebracht, die im zusammengefahrenen Zustand der Backen einen röhrenförmigen Kanal bilden,
- der röhrenförmige Kanal entspricht im Durchmesser dem Außendurchmesser des zu biegenden Rohres,
- der Längsverlauf des röhrenförmigen Kanals entspricht dem Längsverlauf des fertig gebogenen Rohres, wobei
- die Erwärmungsstation und die Biegestation in Längsrichtung des Rohres mit kurzem Abstand hintereinander angeordnet sind,
- die Erwärmungsstation aus zwei auseinanderfahrbaren, das Rohr auf der Länge vom Rohranfang bis kurz nach der letzten vorgesehenen Biegung umgebenden Heizbacken besteht,
- der durch die Rinnen der zusammengefahrenen Backen des Biegewerkzeugs gebildete röhrenförmige Kanal für das in den röhrenförmigen Kanal einzuschiebende plastifizierte Rohr einen Führungskanal bildet.

Auf einer solchen Vorrichtung, die vorzugsweise desweiteren noch eine Kühlstation umfaßt, läßt sich der gesamte Biegevorgang durchführen, wobei das Rohr nur um kurze Wege in seiner Längsrichtung transportiert werden muß. Da das auf Plastifizierungstemperatur gebrachte Rohr beim Biegevorgang altseitig umfaßt ist, ergeben sich auch keine oder nur unwesentliche Querschnittsveränderungen des Rohres an den Biegestellen.

Bei dickwandigen Rohren oder Rohren mit großem Durchmesser wird der röhrenförmige Kanal durch Auseinanderfahren der beiden Backen des Biegewerkzeugs zum leichteren Einschieben des Rohres erweitert. Dabei ist es vorteilhaft, mindestens eine der beiden Backen des Biegewerkzeugs entlang des Verlaufs ihrer Rinne in mehrere Abschnitte zu unterteilen, wobei jeder Abschnitt unabhängig voneinander verstellbar ist. Dadurch wird vermieden, daß Stauchungen im Längsverlauf des Rohres beim Zusammenfahren der Backen auftreten.

Die Erwärmungsstation besteht in vorteilhafter Weise aus zwei auseinanderfahrbaren, elektrisch beheizbaren Backen, in die jeweils Rinnen eingebracht sind, die sich zu einem röhrenförmigen Kanal ergänzen, der die Länge des in das Biegewerkzeug einzuschiebenden Rohrabschnitts hat und dessen Querschnitt in seinen Außenmaßen dem Querschnitt des Rohres entspricht. Damit erfolgt die Wärmeübertragung von den Heizbacken auf die Rohre durch Wärmeleitung, wodurch eine sehr schnelle und fein regulierbare Wärmeübertragung möglich ist.

Zweckmäßigerweise ist an der der Erwärmungsstation gegenüberliegenden Seite des Biegewerkzeugs ein Anschlag angeordnet, gegen den das Rohr beim Einschieben in das Biegewerkzeug anstößt. Damit wird die genaue Plazierung der einzelnen Biegestellen innerhalb der Gesamtlänge des Rohres sichergestellt. In unmittelbarer Nähe des Anschlags ist eine Lichtschranke angeordnet, die durch das vordere Rohrende unterbrochen wird und den Schließvorgang des Biegewerkzeugs auslöst. Damit wird die Zeit zwischen Einschieben des Rohres in das Biegewerkzeug in seine Endposition und Auslösen des Schließvorgangs des Biegewerkzeugs sehr kurz gehalten, und zwar unabhängig von der Reaktion des Bedienungspersonals.

Weiterhin vorteilhaft ist, daß der Anschluß zum Verbinden des hinteren Rohrendes mit der Kühlstation eine weitere Zuleitung für Druckluft zum Trocknen des Rohrinneren besitzt. Damit braucht der Anschluß vom hinteren Rohrende zwischen Kühlen und Trocknen des Rohres nicht gewechselt zu werden. Damit das Kühlmedium und das Trockenmedium aufgefangen werden können, ist auf der der Erwärmungsstation gegenüberliegenden Seite des Biegewerkzeugs ein Anschluß für das vordere Rohrende angeordnet, der für die Ableitung der Kühlflüssigkeit und der Preßluft sorgt. Damit kann einerseits das Kühlmedium wiederverwendet und andererseits das Trockenmedium umweltschonend aufgefangen oder abgeleitet werden.

Nach einem weiteren Vorteil der Erfindung sind die Backen des Biegewerkzeugs leistenförmig ausgebildet, wobei die den Biegekanal bildenden Rinnen in eine schmale Längsseite eingebracht sind. Damit wird die Masse des Biegewerkzeugs erheblich reduziert.

Damit das Rohr beim Einschieben in den Biegekanal bei auseinandergefahrenen Backen nicht aus dem Biegekanal austritt, sind an einer Backe des Biegewerkzeugs entlang der Längskante der an die andere Backe angrenzende Fläche verlaufende und die andere Backe an der Ober- und Unterseite überragende Wangen angeordnet. Diese Wangen sind vorteilhafterweise aus Blechstreifen gebildet, die an der Backe befestigt sind.

Um bei der Verwendung von leistenförmigen Backen dem röhrenförmigen Kanal im Biegewerkzeug auf einfache Art und Weise den Verlauf des gebogenen Rohres geben zu können, folgen die aneinandergrenzenden Flächen der Backen dem Biegeverlauf des Rohres. Es ist jedoch auch möglich, die obere und untere Breitseite der leistenförmigen Backen dem Biegeverlauf des Rohres folgen zu lassen. Soll das Rohr in zwei Ebenen verbogen werden, so ist eine Kombination der beiden vorstehend geschilderten Verläufe des rohrförmigen Kanals möglich.

Ein wichtiger Vorteil der vorgeschlagenen Vorrichtung ist, daß der röhrenförmige Kanal des Biegewerkzeugs eine Führung für das einzuschiebende Rohr bildet und die Heizbacken in Achsrichtung des Rohres vor dem Biegewerkzeug angeordnet sind und für das Rohr gleichzeitig eine Führung beim Einschieben des Rohres bilden, damit das erweichte Rohr beim Einschieben in das Biegewerkzeug nicht ausknickt.

Eine Vorrichtung zum Biegen von von oben in eine Biegestation eingeschobenen Kunststoffrohren nach dem vorstehend genannten Verfahren besteht aus einer Erwärmungs- und einer Biegestation mit folgenden Merkmalen:
- die Erwärmungsstation besteht aus zwei zusammen- und auseinanderfahrbaren, das Kunststoffrohr auf der Länge vom Rohranfang bis kurz nach der letzten vorgesehenen Biegung eng umgebenden Heizbacken,
- die Biegestation weist ein Biegewerkzeug mit mindestens zwei zueinander verstellbaren Backen auf,
- in die aneinandergrenzenden Flächen der Backen des Biegewerkzeuges sind Rinnen eingebracht, die im zusammengefahrenen Zustand der Backen einen röhrenförmigen Kanal bilden, der in seinem Durchmesser dem Außendurchmesser des zu biegenden Kunststoffrohres entspricht,
- der Längsverlauf des röhrenförmigen Kanals entspricht dem Längsverlauf des fertig gebogenen, mehrere Biegungen aufweisenden Kunststoffrohres,
- die Biegung des Kunststoffrohres erfolgt durch Einschieben des plastifizierten Rohrabschnitts in den röhrenförmigen Kanal, wobei
- die Heizbacken so aufgestellt sind, daß die das Kunststoffrohr aufnehmende Röhre senkrecht verläuft,
- das Biegewerkzeug so angeordnet ist, daß der Anfangsabschnitt des röhrenförmigen Kanals senkrecht nach oben weist,
- oberhalb der Erwärmungsstation und der Biegestation ein vertikal und horizontal verfahrbarer Greifkopf angeordnet ist, der das aufgeheizte Kunststoffrohr nach oben aus den Heizbacken herauszieht, zu der seitlich benachbarten Biegestation verfährt und nach unten in das Biegewerkzeug hineinschiebt,
- die Backen des Biegewerkzeugs beim Einschieben des erwärmten Abschnitts des Kunststoffrohres soweit geöffnet sind, daß lediglich ein Vorbiegen des Kunststoffrohres erfolgt, und
- nach dem Einschieben des Kunststoffrohres die Backen des Biegewerkzeugs zum Nachbiegen des Kunststoffrohres vollständig zusammenfahrbar sind.

Auf einer solchen Vorrichtung läßt sich der gesamte Biegevorgang automatisch durchführen, wobei das Rohr nur um kurze Wege transportiert werden muß. Eine solche Vorrichtung eignet sich besonders gut für das Biegen von weniger langen Kunststoffrohren.

Um den Weg des Greifkopfs beim Einschieben des Kunststoffrohres in das Biegewerkzeug zu begrenzen und um das Zufahren der beiden Backen des Biegewerkzeugs auszuschließen, wenn kein ordnungsgemäßes Einschieben des Kunststoffrohres beim Vorbiegen erfolgt ist, ist unmittelbar oder mit Abstand am Ende des röhrenförmigen Kanals des Biegewerkzeugs ein Sensor angeordnet, der von dem Anfang des eingeschobenen Kunststoffrohres betätigbar ist.

Bei einer vorteilhaften Ausgestaltung der Vorrichtung umschließt der Greifkopf das Ende des Kunststoffrohres nicht nur fest, sondern auch dicht, wobei im Greifkopf eine Zuleitung für ein Kühlmedium mündet. Damit kann ohne Lösen des Greifkopfes nach abgeschlossenem Biegevorgang ein Kühlmedium durch das erwärmte Kunststoffrohr hindurchgeschickt werden. Weiterhin ist von Vorteil, daß die im Greifkopf mündende Zuleitung von einem Kühl- auf ein Trockenmedium, wie zum Beispiel Luft, umschaltbar ist.

Um das Beschicken der Erwärmungsstation mit dem zu biegenden Kunststoffrohr außerhalb einer Ummantelung der gesamten Vorrichtung bewerkstelligen zu können, ist die Erwärmungsstation in Richtung auf die Biegestation verfahrbar angeordnet.

Die Zeichnungen veranschaulichen Ausführungsbeispiele der Erfindung, und zwar zeigen
- Figur 1: die Biegevorrichtung, wobei die beiden Backen des Biegewerkzeugs zur Erleichterung des Einschiebens des Rohres leicht auseinandergefahren sind und

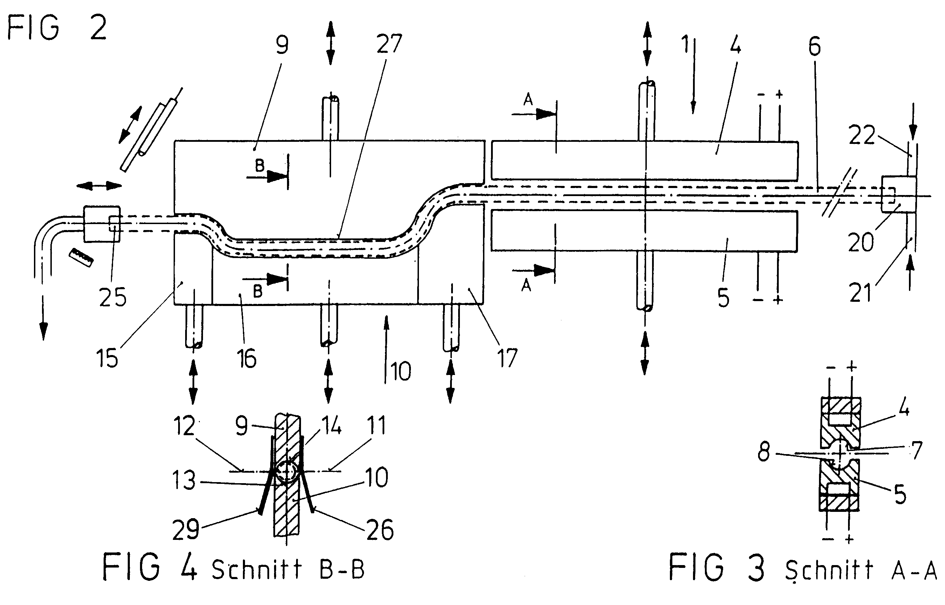

- Figur 2: dieselbe Biegevorrichtung, wobei die Backen des Biegewerkzeugs zusammen und die Heizbacken für den Kühlvorgang auseinandergefahren sind, während
- Figur 3: einen Schnitt nach der Linie A-A und
- Figur 4: einen Schnitt nach der Linie B-B darstellen, und
- Figur 5: die Vorrichtung eines zweiten Ausführungsbeispiels aus einer Seitenansicht und
- Figur 6: aus einer Draufsicht zeigen.

Die Vorrichtung zum Biegen von Kunststoffrohren besteht aus der Erwärmungstation (1), der Biegestation (2) und der Kühlstation (3 und 3a).

Die Erwärmungsstation (1) besteht ihrerseits aus den beiden elektrisch beheizbaren Heizbacken (4 und 5), die getrennt zueinander verfahrbar sind. Die Erwärmungszeit des Kunststoffrohres (6) wird über eine nicht dargestellte Zeitschaltung geregelt. Die Heizbacken (4 und 5) weisen an den beiden benachbarten Flächen jeweils eine Rinne (7, 8) auf, deren Radius dem Radius des Kunststoffrohres (6) entspricht. Bei für den Erwärmungsvorgang zusammengefahrenen Heizbacken (4, 5) liegen die beiden Backen an dem Kunststoffrohr an, so daß eine direkte Wärmeübertragung von den Heizbacken (4, 5) auf das Kunststoffrohr (6) erfolgt.

Die Biegestation besteht aus einem Biegewerkzeug, dessen wesentliche Bestandteile vorzugsweise zwei Backen (9, 10) sind. Die beiden Backen (9, 10) sind gegeneinander verfahrbar. Dabei können beide Backen verfahrbar ausgeführt sein oder auch nur eine. In die beiden zueinander hingerichteten Flächen der beiden Backen (9, 10), die im zusammengefahrenen Zustand der Backen aneinanderliegen können und deswegen nachfolgend als Berührungsflächen (11, 12) bezeichnet werden, sind Rinnen (13, 14) eingebracht, die sich zu einem rohrförmigen Kanal (27) ergänzen. Dieser Kanal (27) hat einen Verlauf, der dem Biegeverlauf des Rohres (6) entspricht. Die Backe (10) des Biegewerkzeugs ist in dem dargestellten Ausführungsbeispiel in die drei Abschnitte (15, 16 und 17) unterteilt, die getrennt voneinander verschiebbar sind.

Auf der der Heizvorrichtung abgewandten Seite des Biegewerkzeugs (9, 10) ist ein Anschlag (18) angeordnet, gegen den das Kunststoffrohr (6) in seiner Endlage anstößt. In unmittelbarer Nachbarschaft zu diesem Anschlag (18) ist eine Lichtschranke (19, 28) angeordnet, die von dem vorderen Rohrende in der Endstellung des Rohres (6) unterbrochen wird und damit einen Impuls gibt zur Betätigung der Backen (9 und 10) des Biegewerkzeugs zum Zwecke des Verfahrens der Backen (9, 10) oder auch nur der Backe (10) des Biegewerkzeugs.

Die Kühlstation besteht im wesentlichen aus dem Anschluß (20) einer Zuleitung (21) für das Kühlmittel und einer Zuleitung (22) für Preßluft sowie einem Anschluß (23) für die Ableitung des Kühlmittels bzw. der Preßluft.

Das Verfahren zum Biegen der Kunststoffrohre mittels der vorstehend beschriebenen Vorrichtung erfolgt in folgenden Verfahrensschritten:

Die Heizbacken (4, 5) werden leicht auseinandergefahren, so daß sich das Kunststoffrohr (6) leicht zwischen die Heizbacken (4, 5) einschieben läßt. Dabei wird das Kunststoffrohr (6) mit seinem vorderen, das heißt, aus den Zeichnungen ersichtlichen linken Ende bis zu dem Ende (24) der Heizbacken (4, 5) eingeschoben. Die Heizbacken (4, 5) werden zusammengefahren, so daß sie mit der Oberfläche der Rinnen (7, 8) an dem Kunststoffrohr (6) anliegen. In einer vorher ermittelten Zeit wird das Kunststoffrohr (6) soweit erwärmt, daß es sich plastisch verbiegen läßt. Ist dieser Plastifizierungspunkt erreicht, werden die Heizbacken (4 und 5) geringfügig auseinandergefahren, so daß sich das Rohr (6) leicht weiterverschieben läßt, jedoch trotzdem noch eine Führung von den Rinnen (7, 8) der Heizbacken (4, 5) erhält. In dieser Stellung der Heizbacken (4, 5) wird das Kunststoffrohr (6) in den von den Rinnen (13, 14) der Backen (9, 10) des Biegewerkzeugs gebildeten röhrenförmigen Kanal (27) eingeschoben, und zwar soweit, bis das vordere Ende (25) des Kunststoffrohres (6) in den Anschluß (23) zum Einsatz kommt. Ist dieses erfolgt, wird ein nicht dargestelltes Ventil des Anschlusses (20) betätigt und Wasser durch das abschnittsweise erwärmte Rohr (6) zur Kühlung des Rohrs hindurchgepumpt. Ist das Kunststoffrohr (6) soweit erkaltet, daß sein erwärmtes Matrial sich wieder verfestigt hat, wird das nicht dargestellte Ventil umgestellt und durch die Zuleitung (22) Preßluft hindurchgeblasen, so daß in dem Rohr (6) verbliebenes Wasser ausgeblasen wird. Vor dem Hindurchpumpen von Kühlflüssigkeit werden die Heizbacken (4, 5) noch weiter auseinandergefahren, so daß diese durch das Kühlen des Kunststoffrohres (6) nicht mit abgekühlt werden. Nach erfolgtem Abkühlen und Austrocknen des Rohres (6) werden die Backen (9 und 10), sowie die Anschlüsse (20 und 23) auseinandergefahren, so daß das gebogene Rohr (6) leicht aus der Biegevorrichtung entnehmbar ist.

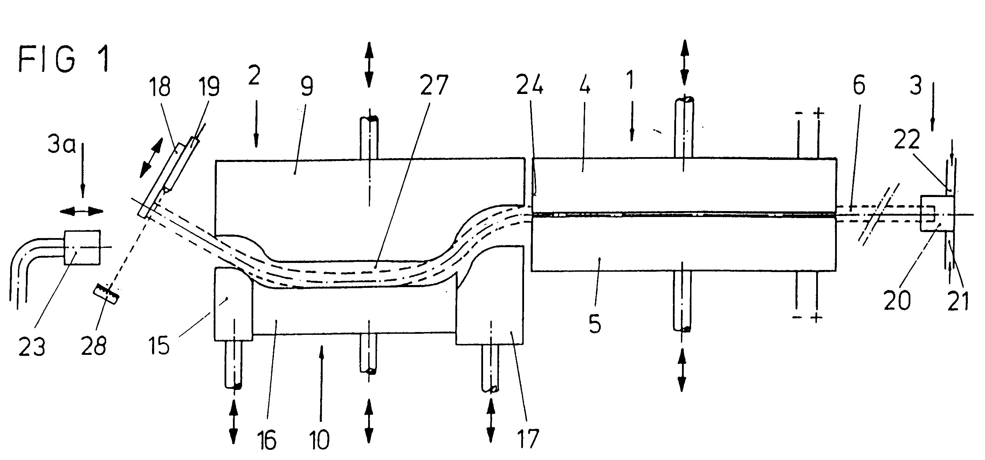

Sind Kunststoffrohre mit größerem Durchmesser oder dickerer Wandung zu biegen, so wird ein Biegewerkzeug verwendet, bei dem die Backen (9, 10) vor dem Einschieben des Kunststoffrohres (6) in die Biegestation auseinandergefahren sind, so daß sich gegenüber dem Außendurchmesser des Kunststoffrohres (6) ein erweiterter Kanal (27), wie in Figur 1 dargestellt, ergibt. Dieser erweiterte Kanal (27) gibt dem Kunststoffrohr (6) beim Einschieben noch nicht die endgültige Form, das heißt, das Kunststoffrohr (6) erhält beim Einschieben in das Biegewerkzeug noch nicht die Biegungen mit den kleinen Radien. Dadurch gestaltet sich das Einschieben des Kunststoffrohres (6) in die Biegeform wesentlich leichter. Das Kunststoffrohr (6) wird dabei bis gegen einen Anschlag (18) geschoben. In dieser Lage des Kunststoffrohres (6) wird die einteilige Backe (10) auf die Backe (9) hin verfahren. Dabei erhält das Kunststoffrohr (6) die endgültige Biegeform.

Bei Kunststoffrohren, die aufgrund ihres Durchmessers oder ihrer Materialstärke noch schwieriger zu verformen sind, wird die Backe (10) des Biegewerkzeugs in die Abschnitte (15, 16, 17) unterteilt. Nach dem Einschieben des Kunststoffrohres (6) in das Biegewerkzeug mit gegenüber dem Kunststoffrohr (6) erweitertem Querschnitt des Kanals (27) wird zunächst der Abschnitt (16) der Backe (10) gegen die Backe (9) hin verfahren, so daß das Kunststoffrohr (6) durch diesen Abschnitt (16) fest in dem Biegewerkzeug eingeklemmt ist. Anschließend werden die Abschnitte (15, 17) der Backe (10) zu der Backe (9) hin verfahren. Dadurch erhält das Kunststoffrohr (6) die endgültige Biegeform.

An der Backe (9) des Biegewerkzeugs sind an der Ober- und Unterseite Wangen (2ó, 29) befestigt, die aus Blechstreifen bestehen. Diese Wangen (2ó, 29) verlaufen entlang den Längskanten der Berührungsfläche (11) der Backe (9) und überragen die Ober- und Unterseite der Backe (10). Sie verhindern, daß das Kunststoffrohr (6) bei auseinandergefahrenen Backen (9, 10) beim Einschieben in den Kanal (27) aus diesem nach oben oder unten austreten kann.

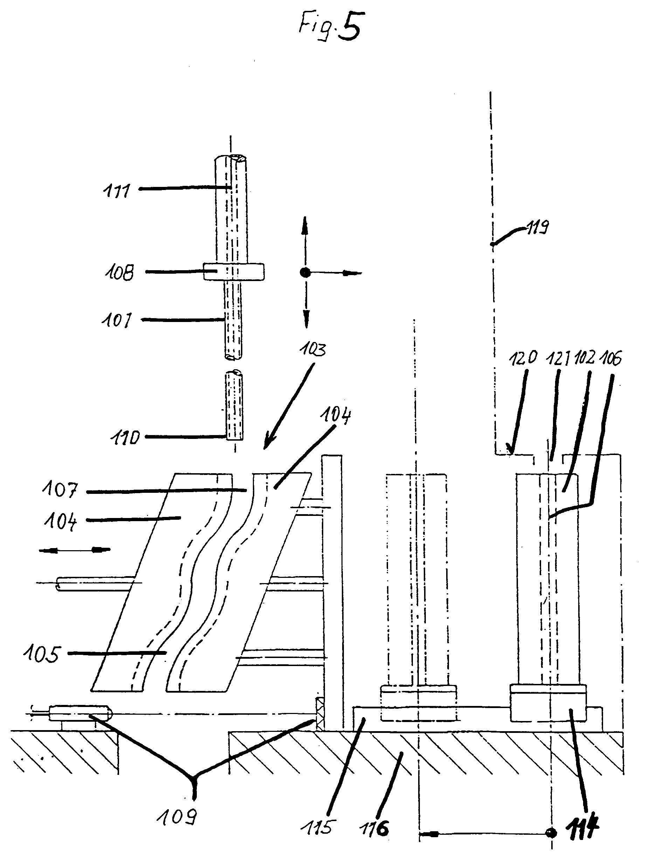

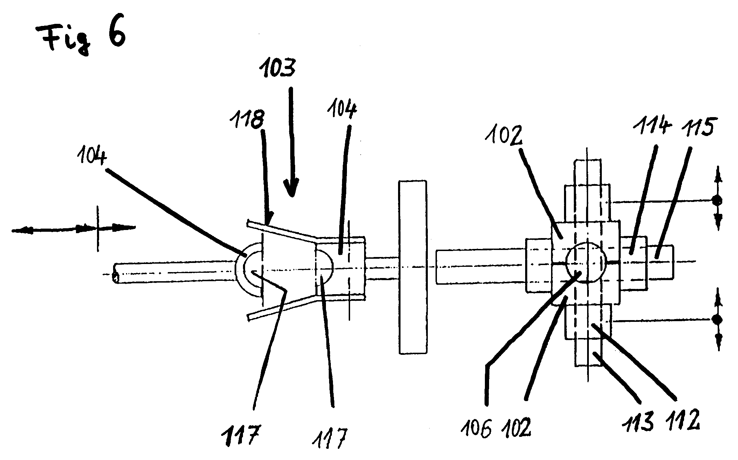

Eine zweites Ausführungsbeispiel wird anhand der Abbildungen 5 und 6 beschrieben:

Die zur Erwärmung des Kunststoffrohres (101) dienende Heizvorrichtung besteht im wesentlichen aus zwei elektrisch aufheizbaren Heizbacken (102), die auseinander- und zueinanderfahrbar sind. Das Verstellen der Heizbacken (102) erfolgt mittels Schlitten (112), die auf einer Schiene (113) verschieblich angeordnet sind. Diese Schiene (113) wird getragen von einem zweiten Schlitten (114), der auf einer zweiten Schiene (115) verschieblich gelagert ist. Die beiden Schienen (113, 115) verlaufen senkrecht zueinander, wobei die zweite Schiene (115) mit ihrer Längsausdehnung auf das Biegewerkzeug (103) hinweist. Die zweite Schiene (115) ist fest mit dem Grundgestell (116) der Vorrichtung verbunden.

Die Biegestation besteht im wesentlichen aus dem Biegewerkzeug (103) mit seinen beiden Backen (104) von denen die eine fest mit dem Grundgestell (116) verbunden ist und die andere verstellbar gelagert ist. Die beiden Backen (104) des Biegewerkzeugs (103) weisen an ihren aneinandergrenzenden Flächen Rinnen (117) auf, die sich im zusammengefahrenen Zustand der beiden Backen (104) zu einem röhrenförmigen Kanal (105) ergänzen. Oberhalb des Biegewerkzeugs (103) ist ein sowohl in vertikaler als auch in horizontaler Richtung verfahrbarer Greifkopf (108) angeordnet, der das Kunststoffrohr (101) aus dem Heizbacken (102) nach oben herauszieht, seitlich verfährt, so daß das Kunststoffrohr oberhalb des Anfangsabschnittes (107) des röhrenförmigen Kanals (105) positioniert wird und dann das Kunststoffrohr (101) nach unten in den röhrenförmigen Kanal (105) hineinschiebt. Dabei sind die beiden Backen (104) des Biegewerkzeugs (103) noch nicht ganz zusammengefahren, so daß sich ein erweiterter röhrenförmiger Kanal (105) ergibt, wie er in der Zeichnung dargestellt ist. Der Anfang (110) des eingeschobenen Kunststoffrohres (101) betätigt in der Endstellung den Sensor (109), welcher den Einschiebevorgang des Kunststoffrohres (101) unterbricht. Damit das Kunststoffrohr (101) sich beim Einschieben in das Biegewerkzeug (103) nicht seitlich aus den Backen (104) herausbiegen kann, ist eine der beiden Backen (104), hier vorteilhafterweise die feststehende Backe, mit seitlich angeordneten Leitblechen (118) versehen.

Die Vorrichtung ist insgesamt mit einem Schutzgehäuse (119) versehen. Dieses Schutzgehäuse (119) weist oberhalb der Heizbacken (102) eine vorspringende Stufe (120) auf, die die Heizbacken (102) nach oben hin bis auf ein Einführungsloch abdecken. Durch das Einführungsloch (121) wird das Kunststoffrohr (101) in die von den beiden Heizbacken (102) gebildete Röhre (106) eingeschoben. Damit sind die Heizbacken (102) auch in dieser ersten Position nach außen hin abgedeckt. Nach dem Einschieben des Kunststoffrohres (101) und nach dem Aufheizvorgang werden die Heizbacken (102) auf das Biegewerkzeug (103) zu verschoben. Diese zweite Position der Heizbacken (102) ist in Figur 5 gestrichelt dargestellt. In dieser Position der Heizbacken (102) wird das Kunststoffrohr von dem Greifkopf (108) nach oben hin, und zwar nachdem die Heizbacken (102) geringfügig auseinandergefahren sind, herausgezogen.

Nachfolgend wird das Verfahren anhand der in den Zeichnungen 5,6 dargestellten Vorrichtung beschrieben.

Das Kunststoffrohr (101) wird in die von den beiden Heizbacken (102) gebildete Röhre (106) eingeschoben und die beiden Heizbacken (102) fahren zusammen, so daß das Kunststoffrohr (101) eng von den Heizbacken (102) umgeben ist. Nach dem Aufheizen des Kunststoffrohres (101) werden die Heizbacken (102) in die in Figur 5 gestrichelt dargestellte Position verfahren. Die Heizbacken (102) fahren geringfügig auseinander, das aus den Heizbacken (102) herausschauende Ende des Kunststoffrohres (101) wird von dem Greifkopf (108) fest und dicht umfaßt und senkrecht nach oben herausgezogen. Dann verfährt der Greifkopf (108) seitlich in die in Figur 5 dargestellte Position oberhalb des Anfangsabschnittes (107) des röhrenförmigen Kanals (105). Anschließend fährt der Greifkopf (108) senkrecht nach unten und schiebt das aufgeheizte Kunststoffrohr (101) in das Biegewerkzeug (103). Dabei sind die beiden Backen (104) noch nicht voll zusammengefahren, so daß sich zunächst noch ein erweiterter röhrenförmiger Kanal ergibt, in den das aufgeheizte Kunststoffrohr (101) leicht eingeschoben werden kann. Beim Einschieben des Kunststoffrohres (101) wird dieses in dem noch nicht verschlossenen Biegewerkzeug (103) vorgebogen. Gelangt das Kunststoffrohr (101) mit seinem Anfang (110) in den Wirkungsbereich des Sensors (109), so schaltet dieser das Abwärtsfahren des Greifkopfs (108) ab und gleichzeitig das Zusammenfahren der beiden Biegebacken (102) ein. Dabei wird die verfahrbare Biegebacke (104) soweit auf die andere Biegebacke zu gefahren, daß die beiden Rinnen (117) in den Backen (102) einen röhrenförmigen Kanal bilden, der in seinem Durchmesser dem Außendurchmesser des Kunststoffrohres (101) entspricht. Bei diesem Zusammenfahren der Biegebacken (104) - erhält das Kunststoffrohr (101) den endgültigen Biegeverlauf. Noch im zusammengefahrenen Zustand der Backen (104) wird durch die Zuleitung (111) im Greifkopf (108) Kühlwasser durch das gebogene Kunststoffrohr (101) hindurchgepumpt. Ist eine ausreichende Abkühlung des Kunststoffrohres (101) erreicht, wird zur Trocknung des Kunststoffrohres durch die Zuleitung (111) Luft hindurchgepumpt. Anschließend wird die verstellbare Backe (104) von der anderen Backe wegbewegt und das fertig gebogene Kunststoffrohr (101) fällt nach unten aus dem Biegewerkzeug (103) heraus.

## Patentansprüche

1. Verfahren zum Biegen von Kunststoffrohren mit mehreren hintereinanderliegenden Biegungen, welches folgende Verfahrensschritte aufweist:
- das zu biegende Rohr (6) wird auf eine Temperatur erwärmt, bei der es sich plastisch verformen läßt,
- das erwärmte Rohr (6) wird in ein zweiteiliges Biegewerkzeug eingeschoben, dessen beide Teile eine Rinne (13, 14) aufweisen, die im zusammengefahrenen Zustand einen röhrenförmigen Kanal (27) bilden, der einen Längsverlauf aufweist, der dem Längsverlauf des fertig gebogenen Kunststoffrohres und dessen Durchmesser dem Außendurchmesser des Rohres (6) entspricht,
- das plastifizierte Kunststoffrohr (6) wird durch die beiden in den zusammenfahrbaren Backen (9, 10) eingebrachten Rinnen (13, 14) gebogen,
- nach dem Biegen des Rohres (6) wird dieses noch in den Backen (9, 10) eingespannt abgekühlt,
- nach dem Abkühlen werden die Backen (9, 10) auseinandergefahren und das gebogene Rohr (6) aus dem Biegewerkzeug entnommen,
dadurch **gekennzeichnet**, daß
- das Rohr (6) durch Erwärmen auf einem Abschnitt plastifiziert wird, der von dem vorderen Ende bis kurz nach der letzten Biegung reicht und
- daß die Erwärmung durch das Rohr (6) umgebende Heizbacken (4,5) erfolgt.

2. Verfahren nach Anspruch 1, dadurch **gekennzeichnet**, daß das Rohr (6) durch elektrisch beheizte Heizbacken (4,5) erwärmt wird.

3. Verfahren nach Anspruch 1 oder 2, dadurch **gekennzeichnet**, daß der erwärmte Abschnitt des zu biegenden Rohres (6) beim Einschieben des Rohres (6) in den durch die beiden Rinnen (7, 8) gebildeten röhrenförmigen Kanal (27) von den Heizbacken (4, 5) geführt wird.

4. Verfahren nach einem der vorstehenden Ansprüche, dadurch **gekennzeichnet**, daß das aufgeheizte Rohr (6) in einen durch geringfügiges Auseinanderfahren der Backen (9, 10) des Biegewerkzeugs erweiterten Kanal (27) geschoben wird und anschließend die beiden Backen (9, 10) zusammengefahren werden.

5. Verfahren nach einem der vorhergehenden Anspüche, dadurch **gekennzeichnet**, daß der plastifizierte Abschnitt in Längsachsrichtung des Rohres (6) bis zu einem Anschlag in den durch Zusammenfahren der Backen (9, 10) von den Rinnen (13, 14) gebildeten röhrenförmigen Kanal (27) geschoben wird.

6. Verfahren nach einem der vorhergehenden Ansprüche, dadurch **gekennzeichnet**, daß
- das zu erwärmende Kunststoffrohr (101) senkrecht hängend oder stehend in ein das Kunststoffrohr (101) kontaktierendes Heizmittel eingebracht wird,
- das erwärmte Kunststoffrohr (101) am oberen Ende ergriffen, senkrecht nach oben aus dem Heizmittel gezogen wird und seitlich zu einer Stellung über dem Biegewerkzeug (103) gebracht wird,
- der plastifizierte Abschnitt des Kunststoffrohres (101) senkrecht nach unten in den von den Rinnen (117) der Backen (104) des Biegewerkzeugs (103) gebildeten röhrenförmigen Kanal (105) geschoben wird, wobei
- der röhrenförmige Kanal (105) zum Einschieben des Kunststoffrohres (101) durch Auseinanderfahren der Backen (104) soweit erweitert wird, daß zunächst ein Vorbiegen erfolgt und nach dem Einschieben des Kunststoffrohres (101) durch Zusammenfahren der Backen (104) das Kunststoffrohr (101) in seine endgültige Form gebogen wird.

7. Verfahren nach einem der vorstehenden Ansprüche, dadurch **gekennzeichnet**, daß als Kühlmedium eine Flüssigkeit durch das gebogene Rohr (6, 101) gepumpt wird.

8. Verfahren nach Anspruch 4, dadurch **gekennzeichnet**, daß das Rohrinnere im Anschluß an das Durchströmen mit flüssigem Kühlmedium mittels Durchblasen von Luft oder einem Gas getrocknet wird.

9. Verfahren nach einem der vorstehenden Ansprüche, dadurch **gekennzeichnet**, daß das erwärmte Rohr (6) beim Einschieben in das Biegewerkzeug von den Heizbacken (4, 5) geführt wird.

10. Verfahren nach einem der vorhergehenden Ansprüche, dadurch **gekennzeichnet**, daß der gewünschte Plastifizierungsgrad des erwärmten Rohres (6, 101) durch Messung der Heizdauer bestimmt wird.

11. Verfahren nach einem der vorhergehenden Ansprüche, dadurch **gekennzeichnet**, daß am Ende des Einschiebens des Rohres (6, 101) in das Biegewerkzeug ein Sensor betätigt wird, der das Zusammenfahren der beiden Backen (9, 10, 104) auslöst.

12. Vorrichtung zum Biegen von Kunststoffrohren mit mehreren hintereinanderliegenden Biegungen, bestehend aus einer Erwärmungs- (1) und Biegestation (2), die folgende Merkmale aufweist:
- die Biegestation (2) weist ein Biegewerkzeug mit mindestens zwei zueinander verstellbaren Backen (9, 10) auf,
- in die aneinandergrenzenden Flächen der Backen (9, 10) sind Rinnen (13, 14) eingebracht, die im zusammengefahrenen Zustand der Backen (9, 10) einen röhrenförmigen Kanal (27) bilden,
- der röhrenförmige Kanal (27) entspricht im Durchmesser dem Außendurchmesser des zu biegenden Rohres (6),
- der Längsverlauf des röhrenförmigen Kanals (27) entspricht dem Längsverlauf des fertig gebogenen Rohres (6), wobei
- die Erwärmungsstation (1) und die Biegestation (2) in Längsrichtung des Rohres (6) mit kurzem Abstand hintereinander angeordnet sind,
- die Erwärmungsstation (1) aus zwei auseinanderfahrbaren, das Rohr (6) auf der Länge vom Rohranfang bis kurz nach der letzten vorgesehenen Biegung umgebenden Heizbacken (4, 5) besteht,
- der durch die Rinnen (13, 14) der zusammengefahrenen Backen (9, 10) des Biegewerkzeugs gebildete röhrenförmige Kanal (27) für das in den röhrenförmigen Kanal (27) einzuschiebende plastifizierte Rohr (6) einen Führungskanal bildet.

13. Vorrichtung nach Anspruch 12, dadurch **gekennzeichnet**, daß die Biegestation (2) ein Biegewerkzeug mit zwei Backen (9, 10) aufweist und daß die Vorrichtung desweiteren eine Kühlstation (3, 3a) mit den folgenden Merkmalen umfaßt:
- die Erwärmungs- (1), Biege- (2) und Kühlstation (3, 3a) sind in Längsrichtung des Rohres (6) hintereinander angeordnet, und
- die Kühlstation (3, 3a) weist für das Durchströmen des gebogenen Rohres (6) mit Kühlmedium eine Zuleitung (21) mit einem Anschluß (20) zum Verbinden mit dem Rohr (6) auf.

14. Vorrichtung nach Anspruch 13, dadurch **gekennzeichnet**, daß mindestens eine der beiden Backen (9, 10) des Biegewerkzeugs entlang des Verlaufs ihrer Rinne (13) in mehrere Abschnitte (15, 16, 17) unterteilt ist und jeder Abschnitt unabhängig voneinander verstellbar ist.

15. Vorrichtung nach einem der Ansprüche 13 oder 14, dadurch **gekennzeichnet**, daß die Erwärmungsstation (1) aus zwei auseinanderfahrbaren, elektrisch beheizten Heizbacken (4, 5) besteht.

16. Vorrichtung nach einem der Ansprüche 13 - 15, dadurch **gekennzeichnet**, daß in die beiden Heizbacken (4, 5) Rinnen (7, 8) eingebracht sind, die sich zu einem rohrförmigen Kanal ergänzen, der die Länge des zu biegenden Rohrabschnitts hat und dessen Querschnitt in der Größe dem Querschnitt des Rohres (6) entspricht.

17. Vorrichtung nach einem der Ansprüche 13 - 16, dadurch **gekennzeichnet**, daß die Backen (9, 10) und die Backenabschnitte (15 bis 17) des Biegewerkzeugs und beide Heizbacken (4, 5) getrennt verfahrbar sind.

18. Vorrichtung nach einem der Ansprüche 13 - 17, dadurch **gekennzeichnet**, daß an der der Erwärmungsstation (1) gegenüberliegenden Seite des Biegewerkzeugs ein Anschlag (18) angeordnet ist, gegen den das Rohr (6) beim Einschieben in das Biegewerkzeug anstößt.

19. Vorrichtung nach einem der Ansprüche 13 - 18, dadurch **gekennzeichnet**, daß mit dem Anschlag (18) ein Sensor gekoppelt ist, der bei Anlage des Rohres (6) am Anschlag (18) das Schließen des Biegewerkzeugs auslöst.

20. Vorrichtung nach einem der Ansprüche 13 - 19, dadurch **gekennzeichnet**, daß in unmittelbarer Nähe des Anschlags (18) eine Lichtschranke (19, 28) angeordnet ist, die durch das vordere Rohrende unterbrochen wird und den Schließvorgang des Biegewerkzeugs auslöst.

21. Vorrichtung nach einem der Ansprüche 13 - 20, dadurch **gekennzeichnet**, daß der Anschluß (21) zum Verbinden des hinteren Rohrendes mit der Kühlstation (3) eine weitere Zuleitung (22) für Druckluft zum Trocknen des Rohrinneren besitzt.

22. Vorrichtung nach einem der Ansprüche 13 - 21, dadurch **gekennzeichnet**, daß auf der der Erwärmungsstation (1) gegenüberliegenden Seite des Biegewerkzeugs ein Anschluß (23) für das vordere Rohrende angeordnet ist, der für die Ableitung der Kühlflüssigkeit und der Preßluft sorgt.

23. Vorrichtung nach einem der Ansprüche 13 - 22, dadurch **gekennzeichnet**, daß die Backen (9, 10) des Biegewerkzeuges leistenförmig ausgebildet sind, wobei die den Biegekanal (27) bildenden Rinnen (13, 14) in eine schmale Längsseite eingebracht sind.

24. Vorrichtung nach einem der Ansprüche 13 - 23, dadurch **gekennzeichnet**, daß an einer Backe (9) des Biegewerkzeugs entlang der Längskanten der Berührungsfläche (12) verlaufende und die andere Backe (10) an der Ober- und Unterseite überragende Wangen (26, 29) angeordnet sind.

25. Vorrichtung nach Anspruch 24, dadurch **gekennzeichnet**, daß die Wangen (26, 29) durch auf der Ober- und Unterseite der einen Backe (9) befestigte Blechstreifen gebildet werden.

26. Vorrichtung nach einem der Ansprüche 13 - 25, dadurch **gekennzeichnet**, daß die aneinandergrenzenden Flächen (11, 12) der Backen (9, 10) dem Biegeverlauf des Rohres (6) folgen.

27. Vorrichtung nach einem der Ansprüche 13 - 26, dadurch **gekennzeichnet**, daß die obere und untere Breitseite der leistenförmigen Backen (9, 10) dem Biegeverlauf des Rohres (6) folgen.

28. Vorrichtung zum Biegen von Kunststoffrohren, bestehend aus einer Erwärmungs- und einer Biegestation, mit folgenden Merkmalen:
- die Erwärmungsstation besteht aus zwei zusammenund auseinanderfahrbaren, das Kunststoffrohr (101) auf der Länge vom Rohranfang bis kurz nach der letzten vorgesehenen Biegung eng umgebenden Heizbacken(102),
- die Biegestation weist ein Biegewerkzeug (103) mit mindestens zwei zueinander verstellbaren Backen (104) auf,
- in die aneinandergrenzenden Flächen der Backen (104) des Biegewerkzeuges (103) sind Rinnen (117) eingebracht, die im zusammengefahrenen Zustand der Backen (104) einen röhrenförmigen Kanal (105) bilden, der in seinem Durchmesser dem Außendurchmesser des zu biegenden Kunststoffrohres (101) entspricht,
- der Längsverlauf des röhrenförmigen Kanals (105) entspricht dem Längsverlauf des fertig gebogenen, mehrere Biegungen aufweisenden Kunststoffrohres,
- die Biegung des Kunststoffrohres (101) erfolgt durch Einschieben des plastifizierten Rohrabschnitts in den röhrenförmigen Kanal (105), wobei
- die Heizbacken (102) so aufgestellt sind, daß die das Kunststoffrohr (101) aufnehmende Röhre senkrecht verläuft,
- das Biegewerkzeug (103) so angeordnet ist, daß der Anfangsabschnitt des röhrenförmigen Kanals (105) senkrecht nach oben weist,
- oberhalb der Erwärmungsstation und der Biegestation ein vertikal und horizontal verfahrbarer Greifkopf (108) angeordnet ist, der das aufgeheizte Kunststoffrohr (101) nach oben aus den Heizbacken (102) herauszieht, zu der seitlich benachbarten Biegestation verfährt und nach unten in das Biegewerkzeug (103) hineinschiebt,
- die Backen (104) des Biegewerkzeugs (103) beim Einschieben des erwärmten Abschnitts des Kunststoffrohres (101) soweit geöffnet sind, daß lediglich ein Vorbiegen des Kunststoffrohres (101) erfolgt, und
- nach dem Einschieben des Kunststoffrohres (101) die Backen (104) des Biegewerkzeugs (103) zum Nachbiegen des Kunststoffrohres (101) vollständig zusammenfahrbar sind.

29. Vorrichtung nach Anspruch 28, dadurch **gekennzeichnet**, daß der Greifkopf (108) das Ende des Kunststoffrohres (101) fest und dicht umschließt.

30. Vorrichtung nach einem der Ansprüche 28 oder 29, dadurch **gekennzeichnet**, daß im Greifkopf (108) eine Zuleitung (111) für ein das gebogene Kunststoffrohr (101) durchströmendes Kühlmedium mündet.

31. Vorrichtung nach einem der Ansprüche 28 - 30, dadurch **gekennzeichnet**, daß die im Greifkopf (108) mündende Zuleitung (111) von einem Kühl- auf ein Trockenmedium umschaltbar ist .

32. Vorrichtung nach einem der Ansprüche 28 - 31, dadurch **gekennzeichnet**, daß die Erwärmungsstation in Richtung auf die Biegestation verfahrbar angeordnet ist.

33. Vorrichtung nach einem der Ansprüche 12 - 32, dadurch **gekennzeichnet**, daß unmittelbar oder mit Abstand am Ende des röhrenförmigen Kanals des Biegewerkzeuges ein Sensor (19, 28, 101) angeordnet ist, der von dem Anfang des eingeschobenen Kunststoffrohres (101) betätigbar ist.

## Claims

1. A process for bending of plastic tubes having a plurality of series-arranged bends, exhibiting the following process steps:
- the tube (6) to be bent is heated to a temperature at which it is plastically deformable,
- the heated tube (6) is inserted into a bipartite bending tool the two parts of which are provided with a groove (13,14) which, in closed condition, forms a tubular channel (27), and the tubular channel is of a longitudinal extension corresponding to the longitudinal pattern of the finally bent plastic tube and the diameter of which corresponds to the outer diameter of the tube (6),
- the plasticized plastic tube (6) is bent by the two grooves (13,14) provided in the closeable jaws (9,10),
- after bending of the tube (6) the same is cooled while still clamped in the jaws (9,10),
- after cooling, the jaws (9,10) are moved apart and the bent tube (6) is withdrawn from the bending tool,
characterized in that
- the tube (6), by way of heating, is plasticized in a section extending from the front-sided end until a short distance after the last bend, and
- heating is effected by heating jaws (4,5) surrounding the tube (6).

2. A process according to claim 1, characterized in that the tube (6) is heated by the electrically heated heating jaws (4,5).

3. A process according to claims 1 or 2, characterized in that the heated section of the tube (6) to be bent, during introduction of the tube (6) into the channel (27) formed by the two grooves (7,8), is guided by the two heating jaws (4,5).

4. A process according to any of the preceding claims, characterized in that the heated tube (6) is pushed into a channel (27) expanded by irrelevantly moving apart the jaws (9,10) of the bending tool, and that the jaws (9,10) are closed thereafter.

5. A process according to any one of the preceding claims, characterized in that the plasticized section, in the longitudinal direction of the tube (6), is pushed until struck by a stop into the tubular channel (27) formed, through closing the jaws (9,10), by the grooves (13,14).

6. A process according to any one of the preceding claims, characterized in that
- the plastic tube (101) to be heated is placed, in a suspended or up-standing condition, into a heating means contacting the plastic tube (101),
- the heated plastic tube (101) is seized at the top end, vertically withdrawn upwardly from the heating means and laterally moved into a position above the bending tool (103),
- the plasticized section of the plastic tube (101) is pushed vertically downwardly into the tubular channel (105) formed by the grooves (117) of the jaws (104) of the bending tool (103), wherein
- the tubular channel (105) for inserting the plastic tube (101), by moving apart the jaws (104), is expanded to such an extent that, initially, a preliminary bending is effected and that, after insertion of the plastic tube (101), by closing the jaws (104), the plastic tube (101) is bent to its final shape.

7. A process according to any one of the preceding claims, characterized in that a liquid serving as a coolant is pumped through the bent tube (6,101).

8. A process according to claim 4, characterized in that the interior of the tube after the liquid coolant having flown therethrough, is dried by blowing air or gas therethrough.

9. A process according to any one of the preceding claims, characterized in that the heated tube (6), during insertion of the bending tool, is guided by the heating jaws (4,5).

10. A process according to any one of the preceding claims, characterized in that the desired degree of plasticization of the heated tube (6,101) is determined by measuring the heating duration.

11. A process according to any one of the preceding claims, characterized in that a sensor is actuated after insertion of the tube (6,101) into the bending tool, which caus es the two jaws (9,10,104) to close.

12. An arrangement for bending plastic tubes with a plurality of series-arranged bends, comprising a heating (1) and a bending (2) stations and exhibiting the following features:
- the bending station (2) comprises a bending tool consisting of at least two jaws (9,10) adjustable with respect to one another,
- the adjoining faces of the jaws (9,10) are provided with grooves (13,14), the grooves configuring a tubular channel (27) when the jaws (9,10) are closed,
- the diameter of the tubular channel (27) corresponds to the outside diameter of the tube (6) to be bent,
- the longitudinal extension of the tubular channel (27) corresponds to the longitudinal extension of the readily bent tube (6),
- the heating station (1) and the bending station (2) are arranged at a short distance one after the other in the longitudinal direction of the tube (6),
- the heating station (1) includes two heating jaws (4, 5) adapted to move apart and encompassing the tube (6) over its length from the beginning of the tube until a short distance after the last bend,
- the tubular channel (27) provided by the grooves (13,14) of the closed jaws (9,10) of the bending tool forms a guiding channel for the plasticized tube (6) which is to be introduced into the tubular channel (27).

13. An arrangement according to claim 12, characterized in that the bending station (2) includes a bending tool formed of two jaws (9,10), and in that the arrangement further has a cooling station (3,3a), exhibiting the following features:
- the heating (1), bending (2) and cooling stations (3,3a) are series-arranged in the longitudinal direction of the tube (6),
- the cooling station (3,3a), for the flow of coolant through the bent tube (6), contains a feed-in line (21) provided with a connecting piece (20) for connection to the tube (6).

14. An arrangement according to claim 13, characterized in that at least one of the jaws (9,10) of the bending tool, along the extension of the groove (13) thereof, is subdivided into a plurality of sections (15,16,17) and that each of the sections is independently adjustable.

15. An arrangement according to any one of claims 13 or 14, characterized in that the heating station (1) comprises two electrically heatable heating jaws (4,5) adapted to be moved apart.

16. An arrangement according to any one of claims 13 to 15, characterized in that provided in the two heating jaws (4,5) are grooves (7,8) forming together a tubular channel having the length of the tube section to be bent and the cross-sectional dimension of which corresponds to the cross-section of the tube (6).

17. An arrangement according to any one of claims 13 to 16, characterized in that the jaws (9,10) and the jaw sections (15 through 17) of the bending tool and the two heating jaws (4,5) are separately movable.

18. An arrangement according to any one of claims 13 to 17, characterized in that provided on the side of the bending tool facing the heating station (1) is a stop (18) struck by the tube (6) during introduction into the bending tool.

19. An arrangement according to any one of claims 13 to 18, characterized in that a sensor is coupled to the stop (18) and causes the bending tool to close when the tube (6) is in abutment with the stop (18).

20. An arrangement according to any one of claims 13 to 19, characterized in that arranged in the immediate vicinity of the stop (18) is a light barrier (19,28) which is interrupted by the front-sided tube end by which the closing of the bending tool is triggered.

21. An arrangement according to any one of claims 13 to 20, characterized in that the connecting piece (21) for connection of the rear tube end to the cooling station (3) includes another feed-in line (22) for compressed air for drying the interior of the tube.

22. An arrangement according to any one of claims 13 to 21, characterized in that provided on the side of the bending tool facing the heating station (1) is a connection (23) for the front-sided tube end which ensures the discharge of coolant and compressed air.

23. An arrangement according to any one of claims 13 to 22, characterized in that the jaws (9,10) of the bending tool are of a strip-type configuration, with the grooves (13,14) forming the bending channel (27) being provided in a narrow longitudinal side.

24. An arrangement according to any one of claims 13 to 23, characterized in that cheeks (26,29) are arranged on a jaw (9) of the bending tool, extending along the longitudinal edges of the contacting face (12) and protruding beyond the other jaw (10) on the upper and lower sides.

25. An arrangement according to claim 24, characterized in that the cheeks (26,29) are formed of sheet metal strips secured to the top and bottom sides of the jaw (9).

26. An arrangement according to any one of claims 13 to 25, characterized in that the adjoining faces (11,12) of the jaws (9,10) follow the bending pattern of the tube (6).

27. An arrangement according to any one of claims 13 to 26, characterized in that the top and bottom broad sides of the strip-shaped jaws (9,10) follow the bending pattern of the tube (6).

28. An arrangement for bending of plastic tubes, comprised of a heating and a bending station and exhibiting the following features:
- the heating station is made up of two heating jaws (102) adapted to be closed and moved apart and closely surrounding the plastic tube (101) across the length from the beginning of the tube until a short distance after the last bend provided,
- the bending station comprises a bending tool (103) containing at least two jaws (104) adjustable with respect to one another,
- provided in the adjoining faces of the jaws (104) of the bending tool (103) are grooves (117) which, in the closed condition of the jaws (104), form a tubular channel (105) the diameter of which corresponds to the outer diameter of the plastic tube (101) to be bent,
- the longitudinal extension of the tubular channel (105) corresponds to the longitudinal extension of the finally bent plastic tube comprising a plurality of bends,
- the bend of the plastic tube (101) is performed by introducing the plasticized tubular section into the tubular channel (105), wherein
- the heating jaws (102) are so mounted that the duct accommodating the plastic tube (101) extends in the vertical direction,
- the bending tool (103) is so arranged that the initial section of the tubular channel (105) is directed vertically upwardly,
- arranged above the heating and the bending stations is a vertically and horizontally movable gripper head (108) upwardly withdrawing the heated plastic tube (101) from the heating jaws (102), moving it to the laterally adjoining bending station and pushing it downwardly into the bending tool (103),
- the jaws (104) of the bending tool (103) during insertion of the heated section of the plastic tube (101) are opened to such an extent that the plastic tube (101) is only preliminarily bent,
- after insertion of the plastic tube (101) the jaws (104) of the bending tool (103) for after-bending the plastic tube (101) are completely closeable.

29. An arrangement according to claim 28, characterized in that the gripper head (108) rigidly and tightly encloses the end of the plastic tube (101).

30. An arrangement according to any one of claims 28 or 29, characterized in that a feed-in line (111) for a coolant flowing through the bent plastic tube (101) terminates in the gripper head (108).

31. An arrangement according to any one of claims 28 to 30, characterized in that the feed-in line (111) terminating in the gripper head (108) can be switched from a coolant to a drying fluid.

32. An arrangement according to any one of claims 28 to 31, characterized in that the heating station is movably arranged in the direction toward the bending station.

33. An arrangement according to any one of claims 12 to 32, characterized in that arranged in the immediate vicinity of, or at a distance from, the end of the tubular channel of the bending tool is a sensor (19,28,101) which is actuatable by the initial section of the inserted plastic tube (101).

## Revendications

1. Procédé pour cintrer des tubes en matière plastique avec plusieurs cintrages successifs, qui comprend les phases de procédé suivantes :
- le tube (6) à cintrer est porté à une température à laquelle il peut subir une déformation plastique,
- le tube chauffé (6) est enfilé dans un outil de cintrage en deux parties dont les deux parties présentent une rainure (13, 14), les deux rainures formant, à l'état rapproché, un canal tubulaire (27) qui présente un profil longitudinal qui correspond au profil longitudinal du tube en matière plastique cintré fini et dont le diamètre correspond au diamètre extérieur du tube (6),
- le tube en matière plastique (6) plastifié est cintré par les deux rainures (13, 14) formées dans les mâchoires (9, 10) qu'on peut rapprocher,
- après le cintrage du tube (6), ce tube est refroidi alors qu'il est encore serré dans les mâchoires (9,10), et
- après le refroidissement, les mâchoires (9, 10) s'écartent et le tube (6) cintré est extrait de l'outil de cintrage.
caractérisé en ce que
- le tube (6) est plastifié par chauffage sur un segment qui s'étend de l'extrémité avant jusqu'à une petite distance au-delà du dernier cintrage, et
- le chauffage est assuré par des mâchoires chauffantes (4, 5) qui entourent le tube (6).

2. Procédé selon la revendication 1, caractérisé en ce que le tube (6) est chauffé par des mâchoires chauffantes (4, 5) chauffées électriquement.

3. Procédé selon la revendication 1 ou 2, caractérisé en ce que le segment chauffé du tube (6) à cintrer est guidé par les mâchoires chauffantes (4, 5), lors de l'enfilage du tube (6) dans le canal tubulaire (27) formé par les deux rainures (7, 8).

4. Procedé selon une des revendications précédentes, caractérisé en ce que le tube chauffé (6) est enfilé dans un canal (27) élargi par un léger écartement des mâchoires (9, 10) de l'outil de cintrage et les deux mâchoires (9, 10) sont ensuite rapprochées.

5. Procédé selon une quelconque des revendications précédentes, caractérisé en ce que le segment plastifié est poussé dans la direction de l'axe longitudinal du tube (6) jusqu'à une butée dans le canal tubulaire (27) formé par les rainures (13, 15) sous l'effet du rapprochement des mâchoires (9, 10).

6. Procédé selon une des revendications précédentes, caractérisé en ce que
- le tube en matière plastique (101) à chauffer est introduit verticalement, en position suspendue ou debout, dans un milieu chauffant qui est en contact avec le tube en matière plastique (101),
- le tube en matière plastique (101) chauffé est saisi à l'extrémité supérieure, extrait verticalement de bas en haut du milieu chauffant et amené par déplacement latéral à une position au-dessus de l'outil de cintrage (103),
- le segment plastifié du tube en matière plastique (101) est enfilé verticalement de haut en bas dans le canal tubulaire (105) formé par les rainures (117) des mâchoires (104) de l'outil de cintrage (103),
- le canal tubulaire (105) étant suffisamment élargi, pour l'enfilage du tube en matière plastique (101), par écartement des mâchoires (104) pour qu'il se produise tout d'abord un précintrage et, après l'enfilage du tube en matière plastique (101), le tube en matière plastique (101) est cintré à sa forme définitive par rapprochement des mâchoires (104).

7. Procédé selon une des revendications précédentes, caractérisé en ce qu'en qualité de fluide de refroidissement, on refoule un liquide à travers le tube cintré (6, 101).

8. Procédé selon la revendication 4, caractérisé en ce que, à la suite du passage du fluide de refroidissement liquide, l'intérieur du tube est séché par soufflage d'air ou d'un gaz à travers ce tube.

9. Procédé selon une des revendications précédentes, caractérisé en ce que, lors de l'enfilage dans l'outil de cintrage, le tube chauffé (6) est guidé par les mâchoires chauffantes (4, 5).

10. Procédé selon une des revendications précédentes, caractérisé en ce que le degré de plastification voulu du tube chauffé (6, 101) est déterminé par une mesure de la durée de chauffage.

11. Procédé selon une des revendications précédentes, caractérisé en ce qu'à la fin de l'enfilage du tube (6, 101) dans l'outil de cintrage, un capteur est actionné et déclenche le rapprochement des deux mâchoires (9, 10, 104).

12. Dispositif pour cintrer des tubes en matière plastique avec plusieurs cintrages successifs, composé d'une station de chauffage (1) et de cintrage (2), qui présente les caractéristiques suivantes :
- la station de cintrage (2) comprend un outil de cintrage qui possède au moins deux mâchoires (9, 10) pouvant être déplacées l'une par rapport à l'autre,
- dans les surfaces adjacentes des mâchoires (9,10), sont ménagées des rainures (13, 14) qui forment un canal tubulaire (27) dans l'état rapproché des mâchoires (9, 10),
- le canal tubulaire (27) correspond en diamètre au diamètre extérieur du tube (6) à cintrer,
- le profil longitudinal du canal tubulaire (27) correspond au profil longitudinal du tube (6) cintré fini,
- la station de chauffage (1) et la station de cintrage (2) étant disposées l'une à la suite de l'autre dans la direction longitudinale du tube (6), à une petite distance d'écartement,
- la station de chauffage (1) étant composée de deux mâchoires chauffantes (4, 5) qui peuvent être écartées l'une de l'autre et qui entourent le tube (6) sur la longueur allant du début du tube jusque juste au-delà du dernier cintrage prévu,
- le canal tubulaire (27) formé par les rainures (13, 14) des mâchoires (9, 10) de l'outil de cintrage rapprochées l'une de l'autre formant un canal de guidage pour le tube (6) plastifié qui doit être enfilé dans le canal tubulaire (27).

13. Dispositif selon la revendication 12, caractérisé en ce que la station de cintrage (2) présente un outil de cintrage comportant deux mâchoires (9, 10) et le dispositif comprend en outre une station de refroidissement (3, 3a) possédant les caractéristiques suivantes :
- les stations de chauffage (1), de cintrage (2) et de refroidissement (3, 3a) sont disposées l'une à la suite de l'autre dans la direction longitudinale du tube (6), et
- la station de refroidissement (3, 3a) présente pour faire passer un fluide de refroidissement dans le tube cintré (6), une conduite d'amenée (21) munie d'un raccord (20) servant à le raccorder au tube (6).

14. Dispositif selon la revendication 13, caractérisé en ce qu'au moins une des deux mâchoires (9, 10) de l'outil de cintrage est divisée en plusieurs segments (15, 16, 17) sur la longueur du profil de sa rainure (13) et chaque segment peut être déplacé indépendamment des autres.

15. Dispositif selon une des revendications 13 et 14, caractérisé en ce que la station de chauffage (1) est composée de deux mâchoires chauffantes (4, 5) chauffées électriquement et qui peuvent s'écarter l'une de l'autre.

16. Dispositif selon une des revendications 13-15, caractérisé en ce que, dans les deux mâchoires chauffantes (4, 5), sont ménagées des rainures (7, 8) qui se complètent pour former un canal tubulaire qui a la longueur du segment de tube à cintrer et dont la section correspond en dimension à la section du tube (6).

17. Dispositif selon une des revendications 13-16, caractérisé en ce que les mâchoires (9, 10) et les segments de mâchoires (15 à 17) de l'outil de cintrage et les deux mâchoires chauffantes (4, 5) peuvent être déplacés séparément.

18. Dispositif selon une des revendications 13-17, caractérisé en ce que sur le côté de l'outil de cintrage qui est à l'opposé de la station de chauffage, est agencée une butée (18) contre laquelle le tube (6) bute lors de l'enfilage dans l'outil de cintrage.

19. Dispositif selon une des revendications 13-18, caractérisé, en ce qu'à la butée (18), est couplé un capteur qui déclenche la fermeture de l'outil de cintrage lors de l'appui du tube (6) contre la butée (18).

20. Dispositif selon une des revendications 13-19, caractérisé en ce que, dans le voisinage immédiat de la butée (18), est agencée un barrage photoélectrique (19, 28) qui est interrompu par l'extrémité avant du tube et déclenche l'opération de fermeture de l'outil de cintrage.

21. Dispositif selon une des revendications 13-20, caractérisé en ce que le raccord (21) servant à raccorder l'extrémité arrière du tube à la station de refroidissement (3) possède une autre conduite d'amenée (22) pour de l'air comprimé, servant pour le séchage de l'intérieur du tube.

22. Dispositif selon une des revendications 13-21, caractérisé en ce que, sur le côté de l'outil de cintrage qui est à l'opposé de la station de chauffage (I), est agencé un raccord (23) pour l'extrémité avant du tube, qui assure l'évacuation du liquide de refroidissement ou de l'air comprimé.

23. Dispositif selon une des revendications 13-22, caractérisé en ce que les mâchoires (9, 10) de l'outil de cintrage sont en forme de barres, les rainures (13, 14) qui forment le canal de cintrage (27) étant formées dans un petit côté longitudinal.

24. Dispositif selon une des revendications 13-23, caractérisé en ce qu'on a prévu, sur une mâchoire (9) de l'outil de cintrage, des joues (26, 29) qui s'étendent le long des bords longitudinaux de la surface de contact (12), et qui débordent sur l'autre mâchoire (10) au niveau du côté supérieur et du côté inférieur.

25. Dispositif selon la revendication 24, caractérisé en ce que les joues (26, 29) sont formées par des bandes de tôle fixées au côté supérieur et au côté inférieur d'une mâchoire (9).

26. Dispositif selon une des revendications 13-25, caractérisé en ce que les surfaces (11, 12) des mâchoires (9, 10) suivent le profil de cintrage du tube (6).

27. Dispositif selon une des revendications 13-26, caractérisé en ce que le côté large supérieur et le côté large inférieur des mâchoires (9, 10) en forme de barres suivent le profil de pliage du tube (6).

28. Dispositif pour cintrer des tubes en matière plastique, composé d'une station de chauffage et d'une station de cintrage, et présentant les caractéristiques suivantes :
- la station de chauffage est composée de deux mâchoires chauffantes (102) qui peuvent être rapprochées et écartées l'une de l'autre et qui entourent étroitement le tube en matière plastique (101) sur la longueur allant du début du tube jusque juste après le dernier cintrage prévu,
- la station de cintrage présente un outil de cintrage (103) possédant au moins deux mâchoires (104) qui peuvent être déplacées l'une par rapport à l'autre,
- dans les surfaces adjacentes des mâchoires (104) de l'outil de cintrage (103), sont ménagées des rainures (117) qui forment, à l'état rapproché des mâchoires (104), un canal tubulaire (105) qui correspond en diamètre au diamètre extérieur du tube en matière plastique (101) à cintrer,
- le profil longitudinal du canal tubulaire (105) correspond au profil longitudinal du tube en matière plastique cintré fini, qui présente plusieurs cintrages,
- le cintrage du tube en matière plastique (101) s'effectue en enfilant le segment de tube plastifié dans le canal tubulaire (105),
- les mâchoires chauffantes (102) étant agencées de manière que le tube qui reçoit le tube en matière plastique (101) s'étende verticalement,
- l'outil de cintrage (103) est agencé de manière que le segment initial du canal tubulaire (105) pointe verticalement vers le haut,
- au-dessus de la station de chauffage et de la station de cintrage, est agencée une tête preneuse (108) qu'on peut déplacer verticalement et horizontalement, qui tire le tube en matière plastique (101) chauffé de bas en haut pour l'extraire des mâchoires chauffantes (102), se déplace vers la station de cintrage qui est latéralement voisine et l'enfile de haut en bas dans l'outil de cintrage (103),
- les mâchoires (104) de l'outil de cintrage (103) sont ouvertes suffisamment lors de l'enfilage du segment chauffé du tube en matière plastique (101) pour qu'il ne se produise qu'un précintrage du tube en matière plastique (101), et
- après l'enfilage du tube en matière plastique (101), les mâchoires (104) de l'outil de cintrage (103) peuvent être rapprochées entièrement pour le cintrage ultérieur du tube en matière plastique (101).

29. Dispositif selon la revendication 28, caractérisé en ce que la tête preneuse (108) entoure solidement et à joint étanche l'extrémité du tube en matière plastique (101).

30. Dispositif selon une des revendications 28 et 29, caractérisé en ce que, dans la tête preneuse (108), débouche une conduite d'amenée (111) pour un fluide de refroidissement qui parcourt le tube en matière plastique cintré (101).

31. Dispositif selon une des revendications 28-30, caractérisé en ce que la conduite d'amenée (111) qui débouche dans la tête preneuse (108) peut être commutée d'un fluide de refroidissement sur un fluide de séchage.

32. Dispositif selon une des revendications 28-31, caractérisé en ce que la station de chauffage est agencé de façon à pouvoir être déplacée en direction de la station de cintrage.

33. Dispositif selon une des revendications 12-32, caractérisé en ce que directement à l'extrémité du canal tubulaire de l'outil de cintrage, ou à distance de cette extrémité, est agencé un capteur (19, 28, 101) qui peut être actionné par la partie initiale du tube en matière plastique (101) enfilé.
